(19) Europäisches Patentamt / European Patent Office / Office européen des brevets

(11) **EP 2 267 647 B1**

## (12) FASCICULE DE BREVET EUROPEEN

(45) Date de publication et mention de la délivrance du brevet:
**09.09.2015 Bulletin 2015/37**

(51) Int Cl.:
***G06K 19/073*** *(2006.01)*    ***G06K 19/07*** *(2006.01)*
***G06K 7/10*** *(2006.01)*

(21) Numéro de dépôt: **10160768.7**

(22) Date de dépôt: **22.04.2010**

(54) **Authentification d'un terminal par un transpondeur électromagnétique**

Authentifizierung eines Endgeräts durch einen elektromagnetischen Transponder

Authentication of a terminal by an electromagnetic transponder

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.06.2009 FR 0954345**

(43) Date de publication de la demande:
**29.12.2010 Bulletin 2010/52**

(73) Titulaire: **STMicroelectronics (Rousset) SAS
13790 Rousset (FR)**

(72) Inventeur: **Wuidart, Luc
83910 Pourrieres (FR)**

(74) Mandataire: **de Beaumont, Michel
Cabinet Beaumont
1, rue Champollion
38000 Grenoble (FR)**

(56) Documents cités:
**US-B1- 7 049 935**

**Description**

Domaine de l'invention

La présente invention concerne de façon générale les systèmes électroniques et plus particulièrement, les systèmes utilisant des transpondeurs électromagnétiques, c'est-à-dire des émetteurs-récepteurs susceptibles d'être interrogés sans contact et sans fil par un terminal de lecture et/ou d'écriture.

Exposé de l'art antérieur

Les systèmes de communication basés sur une modulation d'un champ électromagnétique généré par un terminal sont multiples. US 7,049,935 divulgue un tel système. Cela va de la simple étiquette électronique servant d'antivol à des systèmes plus complexes où un transpondeur, devant communiquer avec le terminal dans le champ duquel il se trouve, est équipé de fonctions de calcul (porte-monnaie électronique par exemple) ou de traitement d'information.

Les systèmes à transpondeurs électromagnétiques sont basés sur l'emploi de circuits oscillants comprenant un enroulement formant antenne, côté transpondeur et côté terminal. Ces circuits sont destinés à être couplés par champ magnétique proche lorsque le transpondeur entre dans le champ du terminal. Les circuits oscillants du terminal et du transpondeur sont généralement accordés sur une même fréquence correspondant à la fréquence d'excitation du circuit oscillant du terminal.

Dans la plupart des cas, les transpondeurs sont dépourvus d'alimentation autonome et extraient l'alimentation nécessaire aux circuits qu'ils comportent du champ haute fréquence rayonné par l'antenne du terminal.

Lorsqu'un transpondeur doit communiquer avec un terminal, le transpondeur peut avoir à authentifier le terminal avant d'accepter un échange de données. Par exemple, dans des applications où le transpondeur sert de moyen de paiement (que ce soit monétaire ou par unité de compte), il peut réserver des paiements à certains terminaux. Selon un autre exemple, un transpondeur de type carte à puce, associé à équipement électronique (par exemple, un assistant personnel ou un téléphone mobile) identifie ou authentifie un utilisateur lors d'une communication avec un autre équipement électronique (par exemple, un ordinateur portable ou de bureau).

Aujourd'hui, les processus d'authentification font appel à des algorithmes de cryptographie et à un échange de données entre le terminal et le transpondeur. Ces processus requièrent des calculs importants qui sont gourmands en énergie et en temps. De plus, tout processus cryptographique est plus ou moins sensible à des attaques visant à percer le secret de l'authentification pour détourner le système.

Résumé

Il serait souhaitable qu'un transpondeur puisse authentifier un terminal avec lequel il doit communiquer avant qu'il ait à transmettre des données au terminal.

Il serait également souhaitable de disposer d'un processus d'authentification indépendant de toute cryptographie.

Il serait également souhaitable de disposer d'un processus d'authentification rapide et moins gourmand en énergie et en calcul.

Il serait également souhaitable de pouvoir authentifier le terminal sans qu'il soit nécessaire d'effectuer, à chaque authentification, un échange de données entre le terminal et le transpondeur.

Pour atteindre tout ou partie de ces objets ainsi que d'autres, il est prévu un procédé d'authentification selon la revendication 6 d'un terminal produisant un champ magnétique, par un transpondeur selon la revendication 1 comportant un circuit oscillant à partir duquel est produite une tension continue, dans lequel au moins une information dépendant du couplage entre le transpondeur et le terminal est comparée à au moins une valeur de référence.

Selon un mode de réalisation de la présente invention, une information relative au niveau de ladite tension continue est mesurée et comparée à une valeur de référence dépendant de cette même tension dans une condition de couplage optimum entre le transpondeur et le terminal.

Selon un mode de réalisation de la présente invention, ladite valeur dans la condition de couplage optimum est déduite d'une phase d'apprentissage.

Selon un mode de réalisation de la présente invention :

une première information relative au niveau de ladite tension continue est mesurée et mémorisée pour une première valeur de charge résistive constituée par des circuits du transpondeur sur le circuit oscillant ;
une deuxième information relative au niveau de ladite tension continue est mesurée et mémorisée pour une deuxième valeur de charge résistive sur le circuit oscillant ; et

un rapport entre les deux informations est comparé à une ou plusieurs valeurs de référence.

Selon un mode de réalisation de la présente invention, ladite valeur de référence dépend des valeurs respectives de charge résistive.

Selon un mode de réalisation de la présente invention, une variation de la charge résistive entre les première et deuxième valeurs est obtenue en modifiant la consommation de circuits de traitement que comporte le transpondeur.

Selon un mode de réalisation de la présente invention, une variation de la charge résistive entre les première et deuxième valeurs est obtenue en commutant un élément résistif de rétromodulation que comporte le transpondeur.

Selon un mode de réalisation de la présente invention, en l'absence d'authentification, le transpondeur envoie des informations volontairement erronées.

On prévoit également un transpondeur électromagnétique comportant :

un circuit oscillant en amont d'un circuit de redressement propre à fournir une tension continue lorsque le transpondeur se trouve dans le champ magnétique d'un terminal ; et

au moins une unité de traitement adaptée à mettre en oeuvre le procédé d'authentification.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation très schématique d'un système à transpondeur du type auquel s'applique à titre d'exemple la présente invention ;

la figure 2 est un schéma bloc simplifié d'un terminal et d'un transpondeur d'un système de communication à transpondeur électromagnétique ;

la figure 3 illustre un exemple d'allure de la tension aux bornes du circuit oscillant du transpondeur en fonction du facteur de couplage ;

la figure 4 est un schéma bloc fonctionnel illustrant un mode de mise en oeuvre du procédé d'authentification d'un terminal par un transpondeur ;

la figure 5 est un schéma-bloc fonctionnel illustrant un mode de mise en oeuvre d'une phase d'apprentissage ; et

la figure 6 est un schéma bloc d'un mode de réalisation d'un transpondeur adapté à authentifier un terminal.

Description détaillée

De mêmes éléments ont été désignés par de mêmes références aux différentes figures. Par souci de clarté, seuls les étapes et éléments utiles à la compréhension de l'invention ont été représentés et seront décrits. En particulier, les communications entre le transpondeur et le terminal n'ont pas été détaillées, l'invention étant compatible avec toute communication usuelle. De plus, les fonctions susceptibles d'être mises en oeuvre par un terminal ou par un transpondeur, autres que l'authentification par ce transpondeur n'ont pas non plus été détaillées, l'invention étant, là encore, compatible avec toute fonction usuelle d'un terminal ou d'un transpondeur.

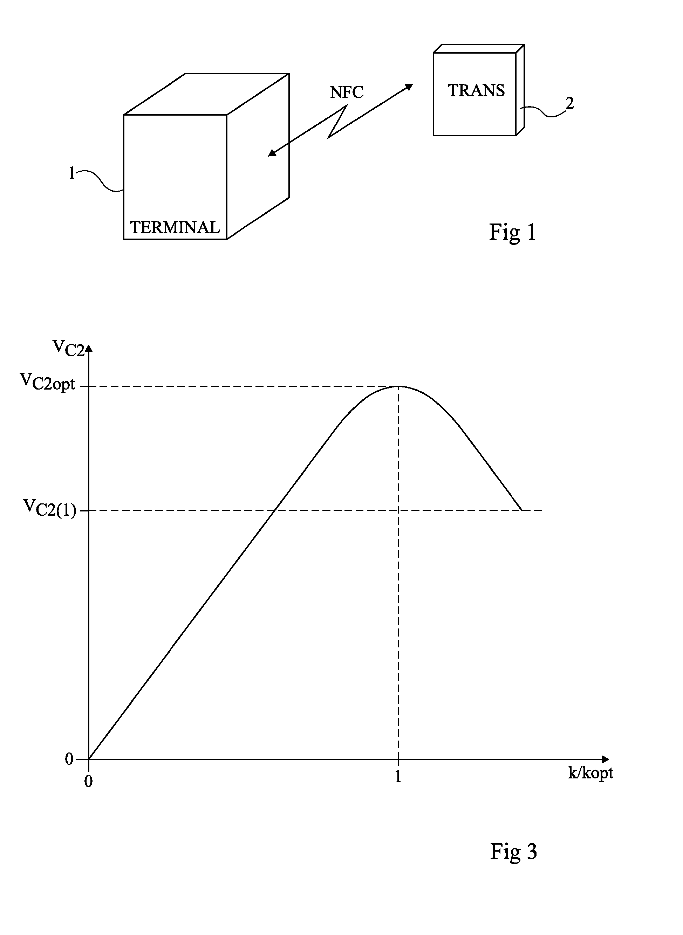

La figure 1 est un schéma bloc d'un système de communication à transpondeur électromagnétique. Un terminal 1 (TERMINAL) est susceptible de communiquer en champ proche (par exemple selon un protocole NFC - Near Field Communication) avec un élément distant, à savoir un transpondeur (TRANS).

Le terminal peut prendre différentes formes, par exemple, une borne de validation de titres de transport, un lecteur de passeports électroniques, un ordinateur portable, un dispositif mobile de communication (téléphone GSM, assistant numérique personnel - PDA, etc.), un boîtier électronique de démarrage d'un véhicule automobile, etc.

Le transpondeur peut de même prendre différentes formes, par exemple, une carte à puce, un titre de transport électronique, un passeport électronique, un terminal de télécommunication (téléphone GSM, PDA, etc.), une étiquette électronique, etc.

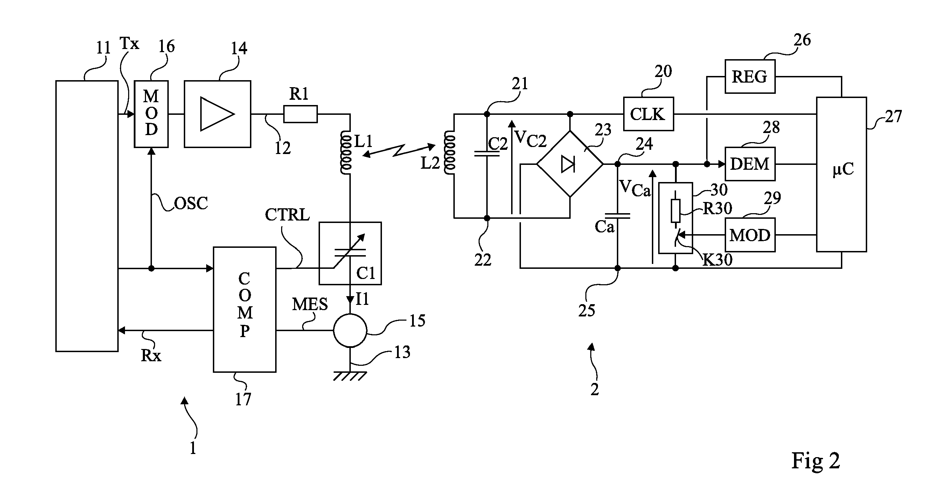

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit si besoin un signal Tx provenant d'un circuit 11 de commande et d'exploitation des transmissions. Ce circuit 11 est généralement pourvu d'un microprocesseur de traitement de commandes et des données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique (secteur) ou à une batterie (par exemple, celle d'un véhicule automobile ou d'un téléphone ou ordinateur portable). Le modulateur 16 fournit une porteuse haute fréquence (par exemple, à 13,56 MHZ) au circuit oscillant série L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne en relation de phase constante avec un signal de référence. Ce signal de référence correspond, par exemple, au signal OSC fourni au modulateur 14. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant détecté par l'élément de mesure 15 (par exemple, un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter le champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternatives d'un pont redresseur 23 (le plus souvent double alternance). Les bornes de sortie redressée du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur μC) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur, le circuit 16 module (généralement en amplitude) la porteuse (signal OSC) en fonction du signal Tx. Côté transpondeur 2, ces données sont démodulées par le démodulateur 28 à partir de la tension $V_{Ca}$. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28, et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est suffisamment long pour ne pas gêner la rétromodulation éventuelle provenant d'un transpondeur, et suffisamment court devant la vitesse de passage d'un transpondeur dans le champ du terminal. On peut parler de régulation statique par rapport aux fréquences de modulation (par exemple, la fréquence de la porteuse de téléalimentation de 13,56 MHz et la fréquence de rétromodulation de 847,5 KHz utilisée pour transmettre des données du transpondeur vers la borne).

Un exemple de terminal à régulation de phase est décrit dans le document EP-A-0 857 981.

Le fait que la phase soit régulée côté terminal permet d'exploiter des mesures de courant et de tension dans le circuit oscillant du transpondeur pour en déduire des informations relatives au couplage du transpondeur lorsqu'il est dans le champ du terminal. Le coefficient de couplage entre le circuit oscillant du terminal et celui du transpondeur dépend essentiellement de la distance séparant le transpondeur du terminal. Le coefficient de couplage, noté k, est toujours compris entre 0 et 1. Il peut être défini par la formule :

$$k = \frac{M}{\sqrt{L1 \cdot L2}} \, , \qquad \text{(formule 1)}$$

dans laquelle M représente l'inductance mutuelle entre les inductances L1 et L2 des circuits oscillants du terminal et du transpondeur.

On définit un couplage optimum comme étant la position à laquelle la tension $V_{C2}$ aux bornes du circuit oscillant du transpondeur est maximale. Ce couplage optimum, noté $k_{opt}$, peut s'exprimer :

$$k_{opt} = \sqrt{\frac{L2}{L1} \cdot \frac{R1}{R2}} \, , \qquad \text{(formule 2)}$$

où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On appellera "charge résistive" la conductance apportée par les circuits du transpondeur, donc leur consommation. Le niveau de cette charge est symbolisé par la résistance R2 en parallèle aux bornes du circuit oscillant. Dans la formule 2 ci-dessus, on a négligé la résistance série de l'inductance L1 (antenne du terminal). On peut également considérer que la valeur de cette résistance série est, par simplification, incluse dans la valeur de la résistance R1.

La formule 2 représente une signature du couple terminal-transpondeur. Pour un même transpondeur et des conditions de fonctionnement données (charge R2), le coefficient de couplage optimum varie en fonction du terminal qui conditionne les valeurs L1 et R1.

On prévoit de tirer profit de cette caractéristique pour permettre à un transpondeur d'authentifier le terminal à portée duquel il se trouve en vérifiant indirectement cette signature.

La figure 3 représente un exemple d'allure de la tension $V_{C2}$ récupérée côté transpondeur en fonction du couplage normalisé $k/k_{opt}$ par rapport au couplage optimum. La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour le coefficient de couplage optimum $k_{opt}$ ($k/k_{opt}$ = 1), puis décroît jusqu'à une valeur intermédiaire VC2(1) atteinte au couplage k = 1.

Pour évaluer, côté transpondeur, son couplage avec le terminal, on exploite l'information de la tension $V_{C2}$ aux bornes de l'élément capacitif C2 de son circuit oscillant. Cette tension est donnée par la relation :

$$V_{C2} = \frac{I2}{\omega \cdot C_2} \, , \qquad \text{(formule 3)}$$

où I2 représente le courant dans le circuit oscillant du transpondeur, et où $\omega$ représente la pulsation du signal.

Le courant I2 est égal à :

$$I2 = \frac{M \cdot \omega \cdot I1}{Z2} \, , \qquad \text{(formule 4)}$$

où I1 représente le courant dans le circuit oscillant du terminal et où Z2 représente l'impédance du transpondeur.

L'impédance Z2 du transpondeur est donnée par la relation suivante :

$$Z2^2 = X2^2 + \left( \frac{L2}{R2.C2} \right)^2 , \qquad \text{(formule 5)}$$

où X2 représente la partie imaginaire de l'impédance du circuit oscillant ( $X2 = \omega \cdot L2 - \dfrac{1}{\omega \cdot C2}$ ) .

Par ailleurs, le courant I1 dans le circuit oscillant du terminal est donné par la relation :

$$I1 = \frac{Vg}{Z1_{app}} , \qquad \text{(formule 6)}$$

où Vg désigne une tension, dite de générateur, excitant le circuit oscillant du terminal, et où $Z1_{app}$ représente l'impédance apparente du circuit oscillant.

Le fait de réguler la phase du circuit oscillant du terminal permet que toutes les variations qui auraient tendance à modifier, de façon statique devant les fréquences de modulation, la partie imaginaire de la charge (load) constituée par le transpondeur, soient compensées par la boucle de régulation de phase. Ainsi, on s'assure qu'en fonctionnement statique la partie imaginaire de l'impédance $Z1_{app}$ est nulle. Par conséquent, cette impédance $Z1_{app}$ devient égale à la résistance apparente $R1_{app}$ (partie réelle de l'impédance) et peut s'exprimer sous la formé :

$$Z1_{app} = R1_{app} = R1 + \frac{k^2 \cdot \omega^2 \cdot L1 \cdot L2^2}{Z2^2 \cdot R2 \cdot C2} . \qquad \text{(formule 7)}$$

Comme les circuits oscillants sont accordés, on peut considérer que la partie imaginaire X2 de l'impédance Z2 est, en première approximation, proche de zéro. Il en découle que la valeur de l'impédance Z2 peut s'écrire :

$$Z2 = \frac{L2}{R2 \cdot C2} . \qquad \text{(formule 8)}$$

En reportant cette simplification dans les formules 4 et 7, et en reportant la formule 4 dans la formule 3, on obtient, pour la tension récupérée $V_{C2}$ aux bornes du circuit oscillant du transpondeur, la formule :

$$V_{C2} = k \cdot \sqrt{\frac{L1}{L2}} \cdot \frac{Vg}{\dfrac{R1}{R2} + k^2 \cdot \dfrac{L1}{L2}} . \qquad \text{(formule 9)}$$

Il ressort de la formule 9 que, pour un terminal donné (valeurs de Vg, R1 et L1 fixes) et pour une inductance L2 fixe (donc une valeur de C2 fixe), la tension $V_{C2}$ ne dépend que du couplage k et de la charge résistive (équivalente à la résistance R2) constituée par les circuits du transpondeur et ramenés en parallèle sur le circuit oscillant.

On notera que la formule 9 n'est applicable qu'en considérant le circuit oscillant du transpondeur L2-C2 réglé à la fréquence d'accord, c'est-à-dire que $\omega \cdot \sqrt{L2 \cdot C2} = 1$ .

En position de couplage optimum $k_{opt}$, la tension maximale $V_{C2Opt}$ est donc donnée par la formule (en combinant les formules 2 et 9) :

$$V_{C2opt} = \frac{Vg}{2} \cdot \sqrt{\frac{R2}{R1}} \qquad \text{(formule 10)}$$

Il ressort de la formule 10 que, pour un terminal donné, il est possible de mémoriser, dans une phase d'apprentissage où le transpondeur est en relation avec le terminal, la valeur $V_{C2opt]R20}$ associée au couple transpondeur-terminal avec la charge R20. Il suffit pour cela de connaître les valeurs Vg et R1 et de mesurer la tension $V_{C2}$.

Par la suite, en fonctionnement, un test d'authenticité peut être effectué en comparant la valeur courante de la tension $V_{C2]R20}$ avec la résistance R2 valant R20 à la valeur $V_{C2opt]R20}$. La valeur courante doit être inférieure ou égale à la valeur mémorisée. Dans le cas contraire, cela signifie que le terminal est réglé pour produire un champ supérieur au champ prévu. On considère alors que le terminal n'est pas authentique (ou qu'il n'est pas configuré correctement). Il y a en effet un risque que ce soit un terminal pirate.

En combinant les formules 9 et 10 et en exprimant le couplage de façon normalisée par le couplage optimum ($k/k_{opt}$), on obtient l'expression suivante de la tension $V_{C2}$ :

$$V_{C2} = 2 \cdot V_{C2opt} \cdot \frac{\dfrac{k}{k_{opt}}}{1 + \left(\dfrac{k}{k_{opt}}\right)^2} . \qquad \text{(formule 11)}$$

Pour une valeur de couplage k donnée, en considérant que l'impédance du circuit oscillant du terminal ne varie pas et que les circuits restent accordés, le rapport entre les valeurs $V_{C2]R21}$ et $V_{C2}R_{20}$ de la tension $V_{C2}$, respectivement pour les valeurs R21 et R20 de la résistance R2, donne d'après la formule 11 la relation suivante :

$$\frac{V_{C2]R21}}{V_{C2]R20}} = \frac{\left(\dfrac{k}{k_{opt\,]R\,20}}\right)^2 + 1}{\left(\dfrac{k}{k_{opt\,]R\,20}}\right)^2 + \dfrac{R\,20}{R\,21}} . \qquad \text{(formule 12)}$$

Il ressort de la formule 12 qu'en augmentant la valeur de la résistance R2 d'une première valeur R20 vers une deuxième valeur R21 supérieure (ce qui revient à diminuer la charge des circuits du transpondeur sur le circuit oscillant L2-C2), la tension $V_{C2]R21}$ sera supérieure à la tension $V_{C2]R20}$. A l'inverse, une diminution de la valeur de la résistance R2 entraine une diminution de la tension $V_{C2}$ récupérée.

Par conséquent, pour un terminal donné (valeurs de Vg et R1 fixes) et un système à l'accord, on peut comparer les tensions obtenues avec deux charges résistives (équivalentes aux résistances R20 et R21). Si en augmentant la valeur R20 de la résistance R2 (en diminuant la charge résistive) vers une valeur R21, la tension $V_{C2]R21}$ obtenue n'est pas supérieure à la tension $V_{C2]R20}$ initiale, cela signifie que la borne est prévue pour produire un courant Vg/R1 inférieur à celui attendu, donc que le couple terminal-transpondeur ne respecte pas la signature attendue.

Pour une variation de charge résistive correspondant à passer d'une résistance équivalente R2 de valeur R20 à une valeur R21 supérieure, la formule 12 donne :

$$\left(\frac{k}{k_{opt]R20}}\right)^2 = \frac{1 - \dfrac{V_{C2]R21}}{V_{C2]R20}} \cdot \dfrac{R20}{R21}}{\dfrac{V_{C2]R21}}{V_{C2]R20}} - 1} . \qquad \text{(formule 13)}$$

En combinant les formules 11 et 13, on obtient :

$$\frac{V_{C2]R20}}{V_{C2opt]R20}} = \frac{2 \cdot \sqrt{\left(\frac{V_{C2]R20}}{V_{C2]R21}} - \frac{R20}{R21}\right)\left(1 - \frac{V_{C2]R20}}{V_{C2]R21}}\right)}}{1 - \frac{R20}{R21}} \text{.(form. 14)}$$

Pour une variation de la valeur de la résistance R2 d'une valeur R20 à une valeur R21 inférieure, les formules 13 et 14 deviennent respectivement :

$$\left(\frac{k}{k_{opt]R20}}\right)^2 = \frac{\frac{V_{C2]R21}}{V_{C2]R20}} \cdot \frac{R20}{R21} - 1}{1 - \frac{V_{C2]R21}}{V_{C2]R20}}} , \text{ et} \qquad \text{(formule 13')}$$

$$\frac{V_{C2]R20}}{V_{C2opt]R20}} = \frac{2 \cdot \sqrt{\left(\frac{R20}{R21} - \frac{V_{C2]R20}}{V_{C2]R21}}\right)\left(\frac{V_{C2]R20}}{V_{C2]R21}} - 1\right)}}{\frac{R20}{R21} - 1} \text{. (f. 14')}$$

Ainsi, on peut également vérifier la valeur de la tension courante $V_{C2]R20}$ avec la résistance R20. Selon le sens de variation de la résistance R2, si cette tension ne respecte pas l'une des relations 14 et 14' ci-dessus, cela signifie que le terminal ne doit pas être considéré comme appartenant au couple terminal-transpondeur prévu.

En pratique, on ne mesure pas directement la tension aux bornes du circuit oscillant, mais la tension lissée aux bornes du condensateur $V_{Ca}$ en sortie du pont redresseur 23. Cette tension $V_{Ca}$ est proportionnelle à la tension $V_{C2}$. Comme on évalue des rapports de tension, il n'est pas nécessaire de connaître le coefficient de proportionnalité entre les tensions $V_{C2}$ et $V_{Ca}$. Dans un exemple de réalisation particulier, la mesure est effectuée par le microprocesseur. La mémorisation des valeurs des tensions mesurées s'effectue, soit de façon analogique, mais préférentiellement de façon numérique sur plusieurs bits dont le nombre dépend de la précision d'analyse souhaitée.

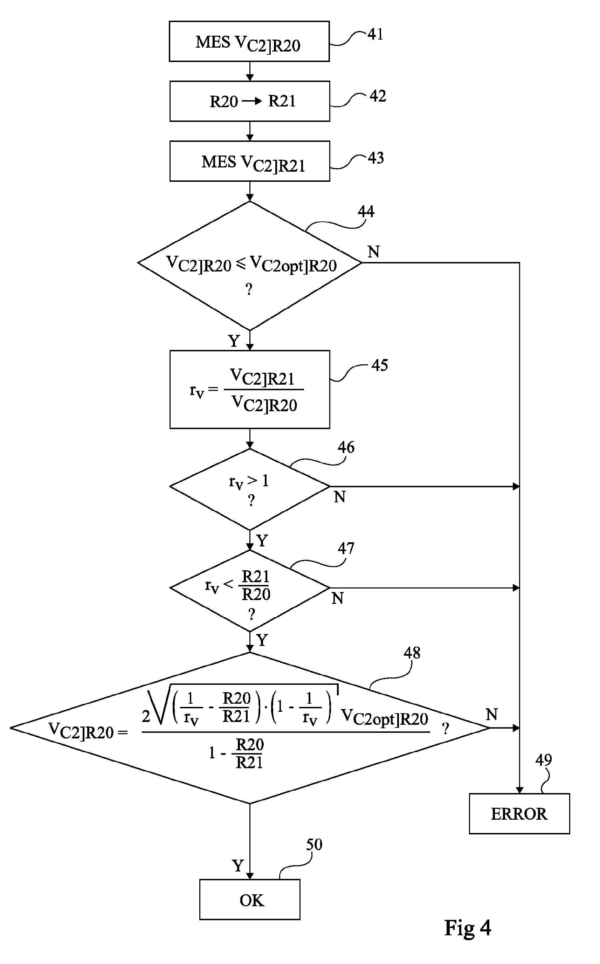

La figure 4 illustre la mise en oeuvre d'un mode de réalisation du procédé de vérification d'authenticité d'un terminal dans le champ duquel un transpondeur se trouve. Pour simplifier l'exposé de la figure 4, on continue à se référer aux valeurs $V_{C2]R20}$ et $V_{C2]R21}$, sachant qu'il est en pratique plus facile de mesurer les valeurs $V_{Ca]R20}$ et $V_{Ca]R21}$ de la tension $V_{Ca}$ mais que cela ne change rien sur les valeurs de comparaison.

On commence (bloc 41, MES $V_{C2]R20}$) par mesurer et mémoriser la tension aux bornes du condensateur C2 avec une première valeur R20 de résistance R2. Puis (bloc 42, R20->R21), on modifie la valeur de l'élément résistif vers une valeur supérieure.

Puis (bloc 43, $V_{C2]R21}$), on mesure la tension $V_{C2}$ avec la valeur de résistance R21 que l'on mémorise.

On compare (bloc 44, $V_{C2]R20} \leq V_{C2opt]R20}$), la valeur courante $V_{C2]R20}$ obtenue avec la valeur R20 par rapport à la valeur $V_{C2opt]R20}$ au couplage optimum $k_{opt}$. On se souviendra que cette valeur au couplage optimum est connue du transpondeur et y a été mémorisée lors d'une phase d'apprentissage où le transpondeur était considéré comme dans le champ d'un lecteur authentique. Le test 44 peut intervenir dès la mesure de la tension $V_{C2]R20}$ effectuée (après l'étape 41).

Si le test 44 n'est pas satisfait (sortie N du bloc 44) l'unité 27 du transpondeur provoque, par exemple, un traitement d'erreur (bloc 49, ERROR). Ce traitement correspond, par exemple, à un refus de transaction, à une réinitialisation du transpondeur, à un fonctionnement dans un mode dégradé (sans réalisation de fonctions sensibles sur le plan des informations manipulées), etc. On peut également prévoir que le transpondeur envoie des messages pour tromper ou désorienter le terminal avec des informations volontairement erronées, par exemple des messages incluant des données aléatoires. Divers autres traitements peuvent être envisagés, par exemple, tout traitement d'erreur habituellement prévu en l'absence d'authentification par un mécanisme de chiffrement.

Si le test 44 est passé positivement (sortie Y du bloc 44), on prévoit, dans le mode de réalisation de la figure 4, d'effectuer deux tests successifs sur la valeur du rapport entre les tensions $V_{C2]R20}$ et $V_{C2]R21}$.

Pour cela, on calcule et on mémorise (bloc 45, $r_v = \dfrac{V_{C2]R21}}{V_{C2]R20}}$) un rapport $r_v$ entre les tensions mesurées avec les charges résistives équivalentes aux valeurs R20 et R21 de résistance R2.

Puis (bloc 46, $r_v > 1$), on vérifie que ce rapport est bien supérieur à 1. Dans la négative (sortie N du bloc 46), on passe au traitement d'erreur 49.

Dans l'affirmative, on vérifie (bloc 47, $r_v < R21/R20$) que ce rapport est inférieur au rapport entre les valeurs R21 et R20. En effet, dans le cas contraire (sortie N du bloc 47), cela signifie que le terminal produit un champ supérieur à celui attendu. Le terminal n'est donc pas autorisé (bloc 49).

Enfin, on effectue de préférence un dernier test sur la valeur de la tension $V_{C2]R20}$ qui revient à vérifier (bloc 48,

$$V_{C2]R20} = \frac{2 \cdot \sqrt{\left(\dfrac{1}{r_v} - \dfrac{R20}{R21}\right) \cdot \left(1 - \dfrac{1}{r_v}\right)} \cdot V_{C2opt]R20}}{1 - \dfrac{R20}{R21}}$$

?) que la formule 14 est respectée. Si ce n'est pas le cas (sortie N du bloc 48), on applique le traitement d'erreur. Si, à l'inverse, tous les tests sont validés (sortie Y du bloc 48), on peut considérer que le terminal dans le champ duquel se trouve le transpondeur est authentique (bloc 50, OK) et la transaction ou communication peut commencer.

Les tests pourront être effectués dans un ordre différent que celui indiqué ci-dessus. Toutefois, ils sont préférentiellement effectués dans un ordre croissant de complexité des calculs, ce qui permet de rejeter plus rapidement un terminal non adapté au transpondeur.

De plus, différentes valeurs intermédiaires (par exemple, le rapport $r_v$ ou le rapport R21/R20) peuvent être mémorisées pour être réutilisées dans les tests successifs ou à l'inverse calculées à chaque fois (à la volée).

Par ailleurs, le nombre de tests effectués dépend de l'application, de la fiabilité de l'authentification souhaitée, de la puissance de calcul du transpondeur, des données disponibles, etc. Par exemple, dans un mode de réalisation simplifié où les valeurs des résistances R20 et R21 ne sont pas déterminables mais où l'on sait seulement que la valeur R21 est supérieure à la valeur R20, on pourra se contenter du test 46. On notera que, dans ce mode de réalisation simplifié, aucun apprentissage n'est nécessaire. On pourra toutefois améliorer la vérification en effectuant plusieurs vérifications avec plus de deux valeurs de résistance R2. L'évaluation peut également être effectuée en diminuant la valeur de la résistance R2. On veillera alors à ce que la valeur soit suffisante pour préserver une valeur $V_{C2]R21}$ de la tension $V_{C2}$ suffisante pour assurer une alimentation des circuits du transpondeur. Par ailleurs, les relations des tests 43 et 47 doivent alors être inversées ($r_v < 1$ et $r_v > R21/R20$).

Des tolérances ou plages de valeurs acceptables peuvent être introduites dans les tests pour tenir compte d'éventuelles dérives de fonctionnement du terminal ou, dans le cas d'une famille de terminaux autorisés, des éventuelles dispersions acceptables parmi les terminaux de cette famille.

Il est donc possible, à partir de deux mesures de tension avec deux valeurs de résistance du circuit oscillant du transpondeur, d'effectuer une authentification du terminal.

La fiabilité de cette authentification peut être améliorée en exploitant des relations déterminées par apprentissage.

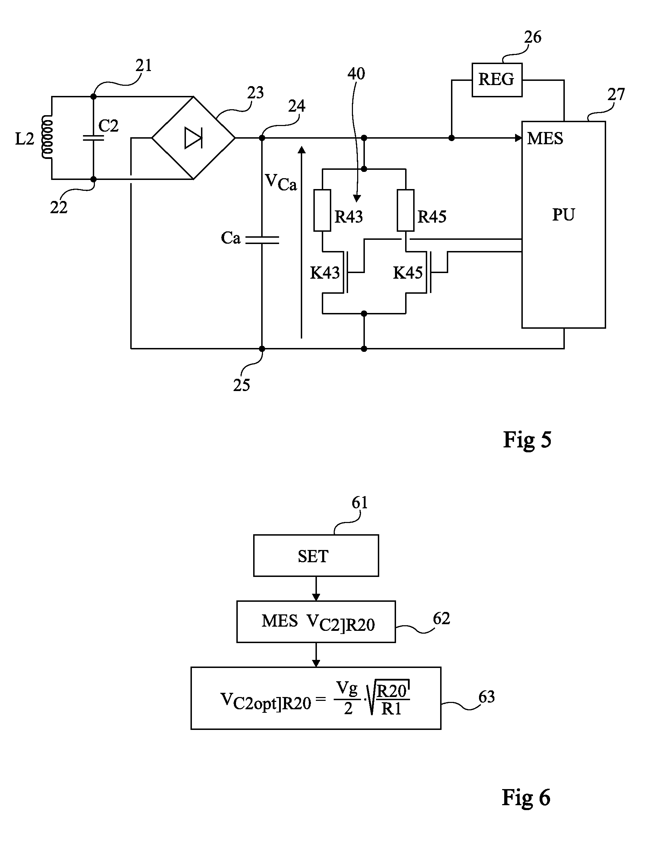

La figure 5 est un schéma-blocs d'un mode de réalisation d'un transpondeur 2, équipé pour déterminer automatiquement, lorsqu'il est dans le champ d'un terminal (non représenté), si ce terminal est autorisé. La représentation de la figure 5 est simplifiée par rapport à celle de la figure 2. En particulier, les éléments de démodulation, de rétromodulation et d'obtention de la fréquence d'horloge n'ont pas été illustrés.

Comme précédemment, le transpondeur 2 est basé sur un circuit oscillant parallèle L2-C2 dont les bornes 21 et 22 sont reliées aux bornes d'entrée d'un pont de redressement 23. En sortie du régulateur 26 peut être prévu un élément de mesure du courant Ic à destination de l'unité de traitement. Par ailleurs, entre les bornes 24 et 25 du pont redresseur 23, est prévu un circuit résistif commutable 40. Par exemple, deux résistances R43 et R45 sont connectées en parallèle en étant chacune en série avec un interrupteur K43, respectivement K45. Les interrupteurs K43 et K45 (par exemple, des transistors MOS) sont destinés à être commutés pour mettre en oeuvre le procédé de détermination de la position de couplage. L'unité de traitement 27 (PU) reçoit une information sur la tension $V_{Ca}$ sur une entrée MES pour mettre en oeuvre le procédé décrit ci-dessus. Dans l'exemple de la figure 5, lorsque les deux résistances R43 et R45 sont fonctionnellement connectées, la résistance R2 (charge des circuits du transpondeur) représente la valeur R20. La déconnexion d'une des résistances (par exemple, la résistance R43) augmente la résistance R2 vers la valeur R21. D'autres connexions et commutations peuvent être prévues selon le mode de réalisation du procédé mis en oeuvre. Par exemple, une seule résistance commutable peut être utilisée en considérant qu'une des deux valeurs de la résistance R2 correspond à la charge résistive des autres circuits du transpondeur.

Selon un mode de réalisation préféré, la résistance commutable correspond à celle utilisée pour une rétromodulation résistive. Par exemple, on effectue une première mesure en commutant la résistance de rétromodulation pour qu'elle soit fonctionnellement dans le circuit (interrupteur K30 à l'état passant dans l'exemple de la figure 2). On mesure la tension $V_{C2]R20}$. Puis, on ouvre l'interrupteur K30 et on mesure la tension $V_{C2]R21}$.

En variante, l'augmentation ou la diminution de la résistance équivalente R2 est provoquée par une variation de la consommation des circuits du transpondeur, typiquement de l'unité de traitement 27. Par exemple, pour diminuer la valeur de la résistance R2 (augmenter la consommation), on déclenche l'exécution de calculs ou de traitements par l'unité 27. On peut également provoquer une augmentation de la résistance équivalente R2 en réduisant la consommation de l'unité 27 en interrompant certains calculs. En variante, on ralentit la vitesse d'exécution conditionnée par l'horloge (bloc 20). La variation de la résistance R2 est connue à partir du moment où la consommation de différentes tâches à exécuter par l'unité 27 est connue.

Les calculs requis pour authentifier un terminal sont suffisamment simples pour que leur temps d'exécution soit négligeable par rapport à la vitesse de déplacement d'un transpondeur devant un terminal (donc la vitesse de variation du coefficient de couplage). C'est en particulier le cas pour des transpondeurs équipés de microcontrôleurs exécutant des fonctions de cryptographie dans lesquels ces fonctions gourmandes en calculs sont elles-mêmes exécutées dans une durée durant laquelle on peut considérer que le couplage ne varie pas. Dans d'autres cas, le transpondeur reste posé sur une surface de réception du terminal et le couplage ne varie donc pas pendant un période encore plus grande.

On notera que l'authentification est effectuée sans qu'il soit nécessaire d'établir une communication avec le terminal. Par conséquent, on garantit une protection des informations contenues dans le transpondeur dans la mesure où l'on peut n'autoriser une démodulation d'une requête (donc une ouverture des fonctions de communication du transpondeur) qu'une fois le terminal authentifié.

La figure 6 est un schéma-blocs fonctionnel d'un exemple de phase d'apprentissage.

Une telle phase est mise en oeuvre lorsque l'on souhaite apparier un terminal avec un transpondeur ou une famille de transpondeurs. Par exemple, une telle phase est mise en oeuvre dans une phase d'étalonnage d'un transpondeur en fin de fabrication. Selon un autre exemple, les valeurs sont déterminées à partir d'échantillons et sont enregistrées dans des mémoires non volatiles des transpondeurs lors d'une fabrication en série. Selon encore un autre exemple, l'appariement d'un transpondeur et d'un terminal est accessible par un utilisateur final pour n'autoriser des échanges qu'entre des dispositifs électromagnétiques qu'il choisit (par exemple, son téléphone mobile avec son ordinateur portable). Pour que le transpondeur dispose des valeurs Vg et R1, on peut prévoir que ces valeurs lui soient communiquées par le terminal lui-même dans cette phase d'apprentissage.

On commence par placer (bloc 61, SET) le transpondeur dans une relation de couplage nominale avec le terminal. Par exemple, une telle relation consiste à poser une carte à puce ou autre type de transpondeur sur une borne à laquelle on souhaite l'apparier.

Puis (bloc 62, MES $V_{C2]R20}$), on mesure la tension $V_{C2]R20}$ avec une charge résistive donnée du transpondeur.

Enfin, on mémorise cette tension, la valeur R20 de la résistance correspondante et des valeurs R1 et Vg correspondant au terminal. Ces valeurs peuvent être fournies par le fabricant du terminal ou être mesurées par des éléments de détection adaptés du terminal et communiquées au transpondeur, par exemple en initiant une communication spécifique lors de la phase d'apprentissage. Plutôt que de mémoriser les différentes valeurs, le transpondeur peut (bloc 63, $V_{C2opt]R20} = \dfrac{Vg}{2} \cdot \sqrt{\dfrac{R20}{R1}}$) calculer directement la valeur $V_{C2opt]R20}$ en appliquant la formule 10 et mémoriser le résultat.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, le choix et l'ordre des tests à effectuer dépend de l'application, par exemple du temps disponible pour réaliser l'authentification, de la capacité de calcul du transpondeur, etc.

**Revendications**

1. Transpondeur électromagnétique comportant :

    une unité de traitement (27) ;
    une charge résistive (R2) ;
    un circuit oscillant (L2, C2) en amont d'un circuit de redressement (23) propre à fournir une tension continue

($V_{Ca}$) lorsque le transpondeur se trouve dans le champ magnétique d'un terminal (1) ; **caractérisé par** un moyen pour mesurer et mémoriser une information représentative d'une première valeur $V_{C2]R20}$ de la tension (V2) aux bornes du condensateur (C2) avec une première valeur (R20) de charge résistive (R2) ; et un moyen pour comparer ladite information représentative de la première valeur de la tension mémorisée ($V_{C2]R20}$) à une valeur de référence $V_{C2opt]R20}$.

2. Transpondeur selon la revendication 1, comportant un moyen d'apprentissage adapté à déduire ladite valeur de référence dans une condition de couplage optimum.

3. Transpondeur selon la revendication 1 ou 2, comportant un moyen pour mesurer une information représentative d'une deuxième valeur $V_{C2]R21}$ de la tension (V2) aux bornes du condensateur (C2) avec une deuxième valeur (R21) de charge résistive (R2) ; et un moyen pour comparer un rapport ($r_v$) entre les informations représentatives des deux valeurs de tensions $V_{C2]R20}$ et $V_{C2]R21}$ à une ou plusieurs valeurs de référence.

4. Transpondeur selon la revendication 3, comportant en outre un moyen pour faire varier la charge résistive (R2) entre les première et deuxième valeurs (R20, R21) en modifiant la consommation de circuits de traitement (27) du transpondeur.

5. Transpondeur selon la revendication 3, comportant en outre un moyen pour faire varier la charge résistive (R2) entre les première et deuxième valeurs (R20, R21) en commutant un élément résistif de rétromodulation (30)

6. Procédé mis en oeuvre dans un transpondeur selon l'une quelconque des revendications 1 à 5, comportant, lorsque le transpondeur capte un champ magnétique produit par un terminal, les étapes suivantes :

   comparer (44) ladite information représentative de la première valeur de la tension mémorisée $V_{C2]R20}$ à ladite valeur de référence $V_{C2opt]R20}$ ; et
   si le résultat de la comparaison montre que cette information est supérieure à la valeur de référence, provoquer un traitement d'erreur (49).

7. Procédé selon la revendication 6, dans lequel si le résultat de la comparaison fait ressortir que l'information représentative de la première valeur est inférieure ou égale à la valeur de référence, calculer et mémoriser (45) un rapport $r_v$ entre les informations représentatives des valeurs de tensions mesurées avec les charges résistives équivalentes aux première et deuxième valeurs (R20, R21) de charge résistive (R2), et comparer (46) ce rapport à l'unité ; et si le rapport est inférieur à l'unité, provoquer ledit traitement d'erreur (49).

8. Procédé selon la revendication 7, comportant, si ledit rapport est supérieur à l'unité, une étape (47) de vérification que ce rapport ($r_v$) est inférieur au rapport entre les deuxième (R21) et première (R20) valeurs de charges résistives ; et dans le cas contraire, provoquer ledit traitement d'erreur (49).

9. Procédé selon la revendication 8, comportant en outre une étape (48) de vérification que la formule :

$$\frac{V_{C2]R20}}{V_{C2opt]R20}} - \frac{2 \cdot \sqrt{\left(\dfrac{V_{C2]R20}}{V_{C2]R21}} - \dfrac{R20}{R21}\right) \cdot \left(1 - \dfrac{V_{C2]R20}}{V_{C2]R21}}\right)}}{1 - \dfrac{R20}{R21}}$$

est satisfaite ; et
dans la négative appliquer le traitement d'erreur (49),
dans l'affirmative, considérer le terminal dans le champ duquel se trouve le transpondeur comme authentique (50).

10. Procédé selon l'une quelconque des revendications 6 à 9, dans lequel, en l'absence d'authentification, le transpondeur (2) envoie des informations volontairement erronées au terminal.

**Patentansprüche**

1. Ein elektromagnetischer Transponder der folgendes aufweist:

   eine Verarbeitungseinheit (27);
   eine Widerstandslast (R2);
   eine Oszillatorschaltung (L2, C2) die eine Gleichrichterschaltung (23) beliefert, geeignet zum Vorsehen einer Gleichspannung ($V_{Ca}$) wenn der Transponder sich in dem Magnetfeld eines Anschlusses (1) befindet, **gekennzeichnet durch**;
   Mittel zum Messen und Speichern einer Information repräsentativ für einen ersten Wert ($V_{C2]R20}$) der Spannung (V2) am Kondensator (C2) mit einem ersten Wert (R20) einer Widerstandslast (R2); und
   Mittel zum Vergleichen der genannten Information repräsentativ für den ersten Wert der gespeicherten Spannung ($V_{C2]R20}$) mit einem ersten Bezugswert ($V_{C2opt]R20}$).

2. Der Transponder nach Anspruch 1, der eine Lernschaltung aufweist, geeignet zur Ableitung des genannten Bezugswertes bei optimalen Kopplungsbedingungen.

3. Der Transponder nach Anspruch 1 oder 2, der Mittel aufweist zum Messen einer Information repräsentativ für einen zweiten Wert ($V_{C2]R21}$) der Spannung (V2) an dem Kondensator (C2) mit einem zweiten Wert (R21) der Widerstandslast (R2); und
   Mittel zum Vergleichen eines Verhältnisses ($r_v$) zwischen den Informationen repräsentativ für die zwei Spannungswerte ($V_{C2]R20}$) und ($V_{C2]R21}$) mit einem oder mehreren Referenzwerten.

4. Der Transponder nach Anspruch 3, der ferner Mittel aufweist zum Verändern bzw. Variieren, der Widerstandslast (R2) zwischen den ersten und zweiten Werten (R20, R21) durch Modifizieren des Leistungsverbrauchs der Verarbeitungsschaltungen (27) des Transponders.

5. Der Transponder nach Anspruch 3, der ferner folgendes aufweist:

   Mittel zum Verändern bzw. Variieren der Widerstandslast (R2) zwischen den ersten und zweiten Werten (R20, R21) und zwar durch Schalten eines Widerstands-Retro-Modulationselements (30).

6. Ein Verfahren implementiert in einem Transponder gemäß einem der Ansprüche 1 bis 5, welches wenn der Transponder ein Magnetfeld eines Anschlusses aufnimmt die folgenden Schritte vorsieht:

   Vergleichen (44) der Information repräsentativ für den ersten Wert der gespeicherten Spannung ($V_{C2]R20}$) mit dem erwähnten Referenzwert ($V_{C2opt]R20}$); und
   wenn das Ergebnis des Vergleichs zeigt, dass die Information größer ist als der Bezugswert, Bewirken einer Fehlerverarbeitung (49).

7. Das Verfahren nach Anspruch 6, wobei dann, wenn das Ergebnis des Vergleichs zeigt, dass die Information repräsentativ für einen ersten Wert kleiner ist oder gleich dem Bezugswert, Berechnen und Speichern (45) eines Verhältnisses ($r_v$) zwischen der Information die repräsentativ ist für die Spannungswerte gemessen mit den Widerstandslasten, äquivalent zu den ersten und zweiten Werten (R20, R21) der Widerstandslast (R2) und Vergleichen (46) dieses Verhältnisses mit eins; und
   wenn das Verhältnis kleiner ist als eins, Bewirken der Fehlerverarbeitung (49).

8. Das Verfahren nach Anspruch 7, wobei, wenn das erwähnte Verhältnis größer als eins ist, folgendes vorgesehen ist:

   ein Schritt (47) der Prüfung dass dieses Verhältnis ($r_v$) kleiner ist als das Verhältnis zwischen den zweiten (R21) und ersten (R20) Werten der Widerstandslast, und
   im gegenteiligen Fall, bewirken der erwähnten Fehlerverarbeitung (49).

9. Das Verfahren nach Anspruch 6, wobei ferner ein Schritt (48) des Prüfens vorgesehen ist, dass die folgende Formel:

$$\frac{V_{C2\rfloor R20}}{V_{C2opt\rfloor R20}} - \frac{2 \cdot \sqrt{\left(\dfrac{V_{C2\rfloor R20}}{V_{C2\rfloor R21}} - \dfrac{R20}{R21}\right) \cdot \left(1 - \dfrac{V_{C2\rfloor R20}}{V_{C2\rfloor R21}}\right)}}{1 - \dfrac{R20}{R21}}$$

erfüllt ist; und

wenn nicht, Anwenden der Fehlerverarbeitung (49),

wenn ja, Betrachtung des Anschlusses in dem Feld in dem sich der Transponder befindet als authentisch (50).

**10.** Das Verfahren nach einem der Ansprüche 6 bis 9, wobei bei Abwesenheit der Authentifikation der Transponder (2) freiwillig irrtümliche Information bezüglich des Anschlusses sendet.

**Claims**

1. An electromagnetic transponder comprising:

   a processing unit (27);
   a resistive load (R2);
   an oscillating circuit (L2, C2) supplying a rectifying circuit (23) adapted to provide a D.C. voltage ($V_{Ca}$) when the transponder is in the magnetic field of a terminal (1), **characterized by**:

   means for measuring and storing an information representative of a first value ($V_{C2\rfloor R20}$) of the voltage (V2) across a capacitor (C2) with a first value (R20) of a resistive load (R2); and
   means for comparing said information representative of the first value of the stored voltage ($V_{C2\rfloor R20}$) with a first reference value ($V_{C2opt\rfloor R20}$).

2. The transponder of claim 1, comprising a learning circuit adapted to deduce said reference value in optimum coupling conditions.

3. The transponder of claim 1 or 2, comprising means for measuring an information representative of a second value ($V_{C2\rfloor R21}$) of the voltage (V2) across the capacitor (C2) with a second value (R21) of resistive load (R2); and means for comparing a ratio ($r_v$) between the information representative of the two voltage values ($V_{C2\rfloor R20}$) and ($V_{C2\rfloor R21}$) with one or more reference values.

4. The transponder of claim 3, further comprising means for varying the resistive load (R2) between the first and second values (R20, R21) by modifying the power consumption of the processing circuits (27) of the transponder.

5. The transponder of claim 3, further comprising means for varying the resistive load (R2) between the first and second values (R20, R21) by switching a resistive retromodulation element (30).

6. A method implemented in a transponder according to any of claims 1 to 5, comprising, when the transponder captures a magnetic field produced by a terminal, the following steps:

   comparing (44) said information representative of the first value of the stored voltage ($V_{C2\rfloor R20}$) with said reference value ($V_{C2opt\rfloor R20}$); and
   if the result of the comparison shows that this information is greater than the reference value, causing an error processing (49).

7. The method of claim 6, wherein, if the result of the comparison shows that the information representative of the first value is smaller or equal to the reference value, calculating and storing (45) a ratio ($r_v$) between the information representative of the voltage values measured with the resistive loads equivalent to the first and second values (R20, R21) of resistive load (R2) and comparing (46) this ratio with unity; and
if the ratio is smaller than unity, causing said error processing (49).

8. The method of claim 7, comprising, if said ratio is greater than unity, a step (47) of checking that this ratio ($r_v$) is smaller than the ratio between the second (R21) and the first (R20) values of resistive load; and, in the contrary case, causing said error processing (49).

9. The method of claim 8, further comprising a step (48) of checking that the formula:

$$\frac{V_{C2]R20}}{V_{C2opt]R20}} - \frac{2 \cdot \sqrt{\left(\dfrac{V_{C2]R20}}{V_{C2]R21}} - \dfrac{R20}{R21}\right) \cdot \left(1 - \dfrac{V_{C2]R20}}{V_{C2]R21}}\right)}}{1 - \dfrac{R20}{R21}}$$

is satisfied; and
if not, applying the error processing (49),
if yes, considering the terminal in the field of which the terminal is as authentic (50).

10. The method of any of claims 6 to 9, wherein, in the absence of authentication, the transponder (2) sends voluntary erroneous information to the terminal.

Fig 1

Fig 3

Fig 2

MES $V_{C2]R20}$ — 41

R20 → R21 — 42

MES $V_{C2]R21}$ — 43

44

$V_{C2]R20} \leqslant V_{C2opt]R20}$ ?

N

Y

$r_v = \dfrac{V_{C2]R21}}{V_{C2]R20}}$ — 45

46

$r_v > 1$ ?

N

Y

47

$r_v < \dfrac{R21}{R20}$ ?

N

Y

48

$V_{C2]R20} = \dfrac{2\sqrt{\left(\dfrac{1}{r_v} - \dfrac{R20}{R21}\right) \cdot \left(1 - \dfrac{1}{r_v}\right)} \; V_{C2opt]R20}}{1 - \dfrac{R20}{R21}}$ ?

N

Y

49

ERROR

50

OK

**Fig 4**

Fig 5

$$V_{C2opt]R20} = \frac{Vg}{2} \cdot \sqrt{\frac{R20}{R1}}$$

Fig 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7049935 B

- EP 0857981 A